# EUROPEAN PATENT SPECIFICATION

(11) **EP 0 799 984 B1**
(45) Date of publication and mention of the grant of the patent: **04.06.2003**
(21) Application number: 97200747.0
(22) Date of filing: 12.03.1997
(51) Int. Cl.: F02D 41/14, F01N 7/00

(54) **Catalytic converter monitor**
Katalysatorüberwachung
Surveillance d'un catalyseur

(30) Priority: 03.04.1996 GB 9607009
(43) Date of publication of application: 08.10.1997
(73) Proprietor: Delphi Technologies, Inc., Troy, MI 48007 (US)
(72) Inventor: Cardinael, Marc, La Madelaine, 4873 (LU)
(74) Representative: Denton, Michael John

(56) References cited:
- EP-A- 0 466 311
- EP-A- 0 478 133
- WO-A-93/09335
- PATENT ABSTRACTS OF JAPAN vol. 018, no. 123 (M-1568), 28 February 1994 & JP 05 312025 A (NISSAN MOTOR CO LTD), 22 November 1993,

## Description

The present invention relates to a catalytic converter monitor.

Changes in emission regulations and the general desire to minimise emissions has led to studies to monitor catalytic converter performance. This may be done to ensure that the engine operates within the capabilities of the converter and also to determine whether the converter performance has been degraded through use to a point at which it needs replacement.

Various monitoring systems have been proposed, most of which involve the use of oxygen sensors both upstream and downstream of the converter. The difference in the sensor signals is used to determine the ability of the converter to store oxygen and to determine therefrom whether the performance of the converter is satisfactory.

In one prior art system, the signal of the downstream oxygen sensor is processed to determine the oxygen storage capacity of the converter. (The signal processing is such that the slope of the downstream oxygen sensor signal will give the oxygen storage capacity of the converter). This system functions in the manner depicted by the following equations:
Hypothesis:
   x = A/D value of rear O₂ sensor
   x_{f} = filtered rear O₂ sensor signal
   O₂ index = oxygen storage capacity of the converter
   t = time instant
   6 msec = duration between two time instants
   α = filter coefficient of x to generate x_{f}
Thesis:
   O₂ index is related to the slope of the rear O₂ sensor
Demonstration:
   O₂ index (t)=x(t)-x_{f}(t) current diagnostic
   x_{f}(t)= x_{f}(t-1)-{α *(x_{f}(t-1)-x(t)} current diagnostic
   x_{f}(t)= (1-α) * x_{f}(t-1) + α * x(t)
   O₂ index(t) = x(t) - {(1-α)* x_{f}(t-1) + α * x(t)}
   O₂ index(t) = (1-α) * x(t) - (1-a) * x_{f}(t-1)
   O₂ index(t) = (1-α) * (x(t) - x_{f}(t-1))

The filter coefficient on the rear O₂ sensor signal is high. Since the loop time is constant the O₂ index value at its maximum will be very close to the slope of the rear O₂ sensor signal.

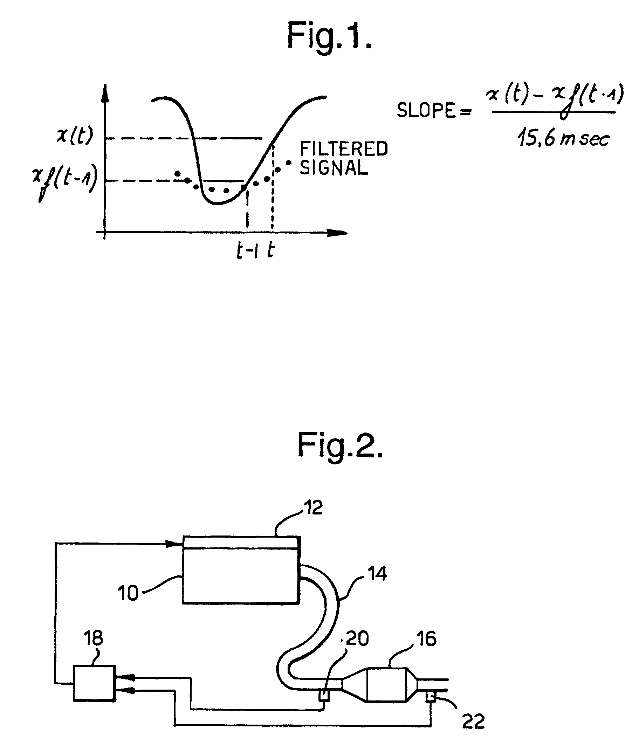

The result of this analysis is shown in Figure 1. It will be apparent that the oxygen sensor index is a measure of the downstream oxygen sensor slope. The slope is related to the response time of the sensor but not to the storage capacity of the converter. Thus, anything which can affect the response time of the sensor will generate an incorrect oxygen sensor index. Factors which can affect sensor response time are, for example, poisoning of the exhaust gases, ageing of the sensor, air-to-fuel ratio control, location of the sensor and so on.

Experience has shown that a lazy downstream oxygen sensor can make an inert converter appear to function properly.

EP-A-0478133 discloses a monitor in accordance with the preamble of claim 1.

Another catalytic converter monitor is disclosed in WO-93/09335. This monitor uses open-loop air-to-fuel changes to switch the sensor between its two saturation levels. The points at which the sensor signal switches are monitored and then used to determine the oxygen capacity of the converter. A problem with this system is that open-loop fuel control can affect the drivability of the vehicle. Moreover, causing the sensors to saturate affects their response times and thereby the accuracy of the system during engine operation.

The present invention seeks to provide an improved interferometer.

A catalytic converter monitor and a method of monitoring in accordance with the present invention is characterised by the features specified in claims 1 and 5 respectively.

It is possible by retaining closed loop control to limit the effect of the changes around the stoichiometric ratio on the engine to levels which the vehicle driver and passengers cannot detect.

The rich bias can be achieved by shifting the switch point of the closed-loop control on the upstream O₂ sensor.

The control preferably generates calibratable lean excursions of the system thanks to an asymmetric proportional control in amplitude and duration. This control will allow stronger air-fuel changes than during normal closed-loop operation.

This asymmetric test of providing a rich bias with lean transitions has not been contemplated by any of the prior art systems.

The control means is able, in the preferred embodiment, to change the duration of the lean excursions so as to reach durations which provide the required change in oxygen ion levels downstream of the converter and thereby satisfactory change in the downstream sensor signal.

The control means is preferably operative to determine the proportional duration of the signal from the downstream sensor. In other words, the control means in this embodiment measures the time during which the downstream sensor senses an oxygen ion level beyond a predetermined threshold. In fact, the preferred embodiment makes use of sensor levels and not sensor slopes, such that the sensor response time is not relevant.

The control means is advantageously operative to determine the oxygen ion storage capacity of the converter from the upstream and downstream sensor signals.

An embodiment of the present invention is described below, by way of example only, with reference to the accompanying drawings, in which:
Figure 1 is a graph of oxygen ion sensor signal against time for a prior art catalytic converter monitor;
Figure 2 is a schematic diagram of an embodiment of catalytic converter monitor; and
Figures 3A to 3D are graphs of sensor outputs of upstream and downstream oxygen sensors of the monitor of Figure 2 during a preferred monitoring routine.

Referring to Figure 2 the embodiment of catalytic converter monitor shown is coupled to an engine 10 of conventional type and which includes a conventional valving system 12 of inlet and outlet valves for the engine cylinders. An exhaust manifold 14 leads to a catalytic converter 16. An electronic control unit 18 is coupled to control the engine valves and/or fuel injection so as to adjust the air-to-fuel ratio, normally to keep it substantially at the stoichiometric ratio. This unit 18 may be part of an engine management system.

Upstream and downstream oxygen sensors 20, 22 are coupled to monitor, respectively, oxygen ion levels of the exhaust gas before and after treatment by the catalytic converter 16. Both sensors 20, 22 are coupled to the control unit 18.

The control unit 18 is operative to carry out a diagnostic routine on the converter 16 when the engine is operating in a steady state. The preferred embodiment considers, rather than sensor response time, the rich or lean status of the sensors, which has a direct relation to the amount of oxygen ions in the exhaust gases. The voltage level of a sensor, indicating the lean or rich condition of air sensed, is less affected by ageing and the like and is easier to diagnose than a change in response time.

As the skilled reader will know, a rich condition leads to a lack of oxygen ions in the exhaust gases with respect to ambient air, while a lean condition leads to an excess of oxygen ions.

The control unit 18 first determines when the operation of the converter is to be tested, for example at regular intervals of engine operation or on predetermined events such as on a power up of the vehicle. When such diagnosis is to be performed and the engine is determined to be operating at steady state, the control unit 18 biases the air-to-fuel ratio rich so as to reduce the oxygen level in the exhaust gases from the engine 10. During this rich bias, the control unit 18 maintains closed loop control of engine operation on the basis of the signal from the upstream oxygen sensor 20, using the usual adaptive control values, so as to retain drivability and to reduce the effect of the rich bias on the operation of the vehicle. The proportional gain in rich bias is applied for a relatively long duration to stabilise fuel control and thereby minimise the noticeable changes in engine performance.

The amount of rich bias is determined by the switching point of the closed-loop control and air-fuel proportional control. This proportional increase is such as to avoid any saturation of the sensors 20, 22 as this would effect the sensor response time and would produce sensor outputs which would not provide the desired resolution in signal level. Moreover, the preferred embodiment provides just a single proportional increase for the type of sensor used, although in some applications it may be desirable to provide more than one proportional increase so as to be able to measure the sensor responses from different rich biases.

The control unit 18 produces lean excursions from the rich bias in periods which have a duration adjusted until the desired output signal is produced by the downstream sensor 22. More specifically, if the duration of each excursion is too short, the converter 16 may be able to absorb all the additional oxygen ions without any breakthrough which can be detected by the downstream sensor 22. On the other hand, if the excursion is too long, there may not be sufficient time for the converter to recover, thereby resulting in permanent breakthrough of oxygen ions. Example durations may be between 1/10th of a second to 1/2 of a second, depending upon the application.

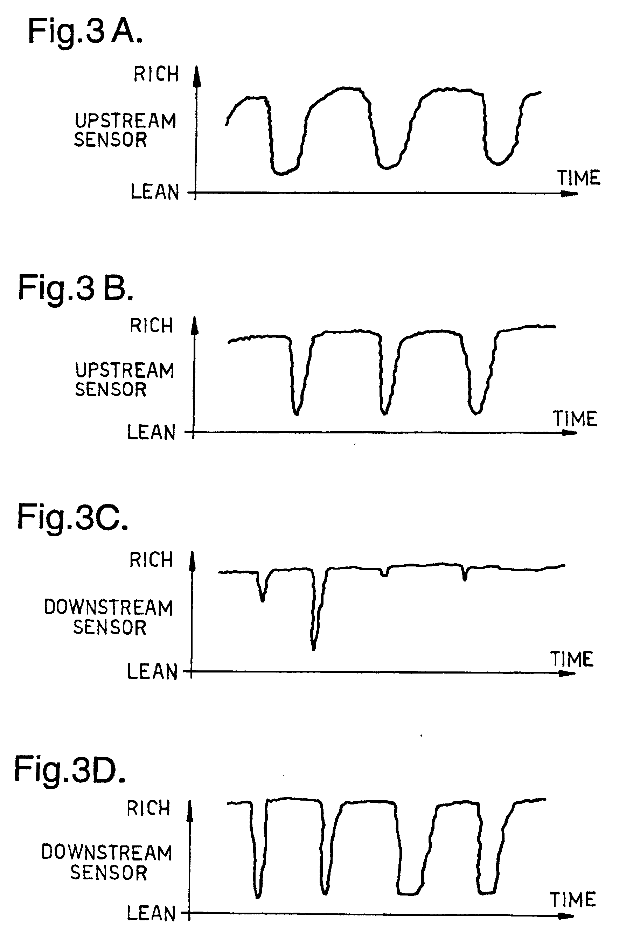

Figure 3A shows the response of the upstream sensor to a rich bias with long lean excursions. As will be apparent, when the engine is biased rich, there will be a low oxygen ion content in the exhaust gases and therefore both sensors will produce a low oxygen output signal. An lean excursion will increase the oxygen ion content in the exhaust gases, which will be immediately sensed (subject to the sensor response time) by the upstream sensor 20. The same will not normally apply to the downstream oxygen sensor since the catalytic converter 16 will absorb some or all of the excess oxygen ions, depending upon the oxygen capacity of the converter 16 and the duration of the lean excursions.

Figure 3B shows the response of the upstream sensor to a rich bias with short excursions. The troughs in the graph are much narrower than with long excursions since there will be less time during which there is an excess of oxygen ions in the exhaust gases. This will in turn lead to narrower troughs in the downstream sensor signal, so long as there is still breakthrough of oxygen ions.

In the preferred embodiment, the control unit 18 adjusts the length of the lean excursions up to the point at which they still produce an effect at the downstream sensor. The excursions, as with the degree of rich bias, are preferably as short as possible to reduce or eliminate noticeable changes in engine performance.

A good catalyst has good oxygen storage capability, which will therefore result in the downstream oxygen sensor producing a different (reduced) signal relative to the upstream oxygen sensor. On the other hand, a catalyst with poor performance will have poor or no oxygen storage capacity, with the result that the downstream oxygen sensor will more closely follow the upstream oxygen sensor. For a normal catalytic converter, there will be a time lapse between a trough in the downstream sensor signal with respect to the corresponding trough in the upstream sensor signal.

Figure 3C shows the response of the downstream sensor signal for a catalyst with satisfactory oxygen storage capacity. It will be seen that the downstream sensor signal is uneven compared to the upstream sensor signal, caused by oxygen ion absorption by the catalyst 16, and is also delayed relative to the upstream sensor signal.

On the other hand, Figure 3D shows the downstream sensor 22 response in the case of a poor catalyst. This signal mirrors very closely the signal of the upstream sensor 20 and is little delayed relative thereto. This is as a result of low oxygen ion absorption by the converter 16.

The preferred embodiment is designed to detect the time during which the downstream oxygen sensor signal passes through a threshold signal level, that is the time during which it measures a threshold oxygen excess. This time, when compared to the equivalent time for the upstream sensor 20, is related to the oxygen storage capacity of the converter 16. Thus, an oxygen index for the converter can be developed on the basis of this time difference and, if desired, other operating parameters of the engine, such as emission levels and the like. It will be apparent to the skilled person how a suitable oxygen index can be developed.

The system described herein can have several advantages relative to the prior art, these being as follows:
a) the oxygen index is closer to the storage capacity of the catalyst;
b) since the system monitors the voltage level of the downstream sensor signal, it is less sensitive to the sensor response time;
c) the rich bias applied during the testing period generally has a low impact on drivability;
d) the rich bias applied during the testing period generally has no impact on Noₓ emissions. If desired, this can be improved by closing exhaust gas recirculation during the testing period for engine stability;
e) experiments have shown only small variations in test results, leading to more accurate diagnosis. This also allows for the time for the test to be shortened with respect to prior art systems;
f) the emissions impact of the diagnostic is very limited especially for future dual catalyst systems. The reductive atmosphere will be a benefit.

## Claims

1. A catalytic converter monitor for monitoring the performance of a catalytic converter (16) of an internal combustion engine (10), including first and second oxygen sensors (20,22) disposed respectively upstream and downstream of the catalytic converter in the normal direction of air flow through the converter, control means (18) operative to control the combustion in the engine and coupled to the sensors; the control means being operative during a monitoring period to bias the air-to-fuel ratio of fluid passing into the engine from the stoichiometric ratio to a steady rich state while controlling in a closed loop manner the performance of the engine on the basis of the upstream sensor signal, to generate lean transitions from the fuel rich condition, and to monitor the change in output signals from the sensors during any generated lean transition, **characterised in that** the amount of rich bias is chosen so as to avoid saturation of the sensors.

2. A catalytic converter monitor according to claim 1, wherein the control means (18) is operative to change the duration of the lean excursions.

3. A catalytic converter monitor according to claim 1 or claim 2, wherein the control means (18) is operative to determine the duration in which the signal of the downstream sensor (22) is beyond a threshold.

4. A catalytic converter monitor according to any preceding claim, wherein the control means (18) is operative to determine the oxygen ion storage capacity of the converter (16) from the upstream and downstream sensor signals.

5. A method of monitoring the performance of a catalytic converter (16) of an internal combustion engine (10) in which first and second oxygen sensors (20,22) are disposed respectively upstream and downstream of the catalytic converter in the normal direction of air flow through the converter, comprising the steps of biasing during a monitoring period the air-to-fuel ratio of fluid passing into the engine from the stoichiometric ratio to a steady rich state while controlling in a closed-loop manner the performance of the engine on the basis of the upstream sensor signal, generating lean transitions from the fuel rich condition, and monitoring the change in output signals from the sensors during any generated lean transition, **characterised by** controlling the amount of rich bias in a manner as to avoid saturation of the sensors.

6. A method according to claim 5, including the step of changing the duration of the lean excursions.

7. A method according to claim 5 or claim 6, including the step of determining the duration in which the signal of the downstream sensor (22) is beyond a threshold.

8. A method according to any one of claims 5 to 7, including the step of determining the oxygen ion storage capacity of the converter (16) from the upstream and downstream sensor signals.

## Patentansprüche

1. Überwachungseinrichtung für einen Katalysator zum Überwachen der Leistung eines Katalysators (16) eines Verbrennungsmotors (10) mit einem ersten und einem zweiten Sauerstoffsensor (20, 22), die jeweils oberstromig und unterstromig des Katalysators in der normalen Luftströmungsrichtung durch den Katalysator hindurch angeordnet sind, und einem Regelungsmittel (18), das dazu dient, die Verbrennung in dem Motor zu regeln, und das mit den Sensoren gekoppelt ist; wobei das Regelungsmittel dazu dient, während einer Überwachungsperiode das Luft/Kraftstoff-Verhältnis von Fluid, das in den Motor hineingelangt, von dem stöchiometrischen Verhältnis zu einem stationären fetten Zustand zu verstellen, während die Leistung des Motors auf der Grundlage des Signals des oberstromigen Sensors auf die Art eines geschlossenen Regelkreises geregelt wird, um Übergänge nach Mager aus dem fetten Zustand zu erzeugen und die Änderung in Ausgangssignalen von den Sensoren während jedes erzeugten Überganges nach Mager zu überwachen, **dadurch gekennzeichnet, dass** das Ausmaß an Verstellung nach Fett derart gewählt ist, dass Sättigung der Sensoren vermieden wird.

2. Überwachungseinrichtung für einen Katalysator nach Anspruch 1, wobei das Regelungsmittel (18) dazu dient, die Dauer der Ausschläge nach Mager zu verändern.

3. Überwachungseinrichtung für einen Katalysator nach Anspruch 1 oder Anspruch 2, wobei das Regelungsmittel (18) dazu dient, die Dauer zu bestimmen, über die das Signal des unterstromigen Sensors (22) jenseits eines Schwellenwertes liegt.

4. Überwachungseinrichtung für einen Katalysator nach einem der vorhergehenden Ansprüche, wobei das Regelungsmittel (18) dazu dient, die Sauerstoffionenspeicherkapazität des Katalysators (16) aus den Signalen des oberstromigen und des unterstromigen Sensors zu bestimmen.

5. Verfahren zum Überwachen der Leistung eines Katalysators (16) eines Verbrennungsmotors (10), bei dem ein erster und ein zweiter Sauerstoffsensor (20, 22) jeweils oberstromig bzw. unterstromig des Katalysators in der normalen Luftströmungsrichtung durch den Katalysator hindurch angeordnet sind, mit den Schritten, dass während einer Überwachungsperiode das Luft/Kraftstoff-Verhältnis von Fluid, das in den Motor hineingelangt, von dem stöchiometrischen Verhältnis zu einem stationären fetten Zustand verstellt wird, während die Leistung des Motors auf der Grundlage des Signals des oberstromigen Sensors auf die Art eines geschlossenen Regelkreises geregelt wird, Übergänge nach Mager aus dem fetten Zustand erzeugt werden, und die Änderung in Ausgangssignalen von den Sensoren während jedes erzeugten Überganges nach Mager überwacht wird, **dadurch gekennzeichnet, dass** das Ausmaß an Verstellung nach Fett auf eine Weise geregelt wird, dass Sättigung der Sensoren vermieden wird.

6. Verfahren nach Anspruch 5, das den Schritt umfasst, dass die Dauer der Ausschläge nach Mager verändert wird.

7. Verfahren nach Anspruch 5 oder Anspruch 6, das den Schritt umfasst, dass die Dauer bestimmt wird, über die das Signal des unterstromigen Sensors (22) jenseits eines Schwellenwertes liegt.

8. Verfahren nach einem der Ansprüche 5 bis 7, das den Schritt umfasst, dass die Sauerstoffionenspeicherkapazität des Katalysators (16) aus den Signalen der oberstromigen und unterstromigen Sensoren bestimmt wird.

## Revendications

1. Unité de contrôle de convertisseur catalytique permettant de contrôler les performances d'un convertisseur catalytique (16) d'un moteur à combustion interne (10), laquelle comprend un premier et un second capteurs d'oxygène (20, 22) disposés respectivement en amont et en aval du convertisseur catalytique dans le sens normal de l'écoulement de l'air à travers le convertisseur, un moyen de commande (18) permettant de commander la combustion dans le moteur et couplé aux capteurs, le moyen de commande pouvant être actionné lors d'une période de contrôle afin de modifier le rapport air-carburant du fluide qui s'écoule dans le moteur de manière à le faire passer d'un rapport stoechiométrique à un état de mélange riche et stable tout en gérant en boucle fermée les performances du moteur en fonction du signal du capteur amont, ceci afin de générer des transitions de mélange pauvre depuis l'état de mélange riche du carburant, et de contrôler les modifications des signaux de sortie provenant des capteurs lors de toute transition de mélange pauvre générée, laquelle unité est **caractérisée en ce que** l'ampleur de la modification vers un mélange riche est choisie de manière à éviter une saturation des capteurs.

2. Unité de contrôle de convertisseur catalytique selon la revendication 1, dans laquelle le moyen de commande (18) peut être actionné afin de modifier la durée des excursions vers un mélange pauvre.

3. Unité de contrôle de convertisseur catalytique selon la revendication 1 ou la revendication 2, dans laquelle le moyen de commande (18) peut être actionné afin de déterminer la durée pendant laquelle le signal du capteur aval (22) dépasse un certain seuil.

4. Unité de contrôle de convertisseur catalytique selon l'une quelconque des revendications précédentes, dans laquelle le moyen de commande (18) peut être actionné afin de déterminer la capacité de stockage d'ions d'oxygène du convertisseur (16) à partir des signaux des capteurs amont et aval.

5. Procédé permettant de contrôler les performances du convertisseur catalytique (16) d'un moteur à combustion interne (10), selon lequel un premier et un second capteurs d'oxygène (20, 22) sont disposés respectivement en amont et en aval du convertisseur catalytique dans le sens normal de l'écoulement de l'air à travers le convertisseur, et qui comprend des étapes consistant à modifier, lors d'une période de contrôle, le rapport air-carburant du fluide qui s'écoule dans le moteur de manière à le faire passer d'un rapport stoechiométrique à un état de mélange riche et stable tout en gérant en boucle fermée les performances du moteur en fonction du signal du capteur amont, à générer des transitions de mélange pauvre depuis l'état de mélange riche du carburant, et à contrôler les modifications des signaux de sortie provenant des capteurs lors de toute transition de mélange pauvre générée, lequel procédé est **caractérisé en ce que** l'on régule l'ampleur de la modification vers un mélange riche de manière à éviter une saturation des capteurs.

6. Procédé selon la revendication 5, comprenant une étape qui consiste à modifier la durée des excursions vers un mélange pauvre.

7. Procédé selon la revendication 5 ou la revendication 6, comprenant une étape qui consiste à déterminer la durée pendant laquelle le signal du capteur aval (22) dépasse un certain seuil.

8. Procédé selon l'une quelconque des revendications 5 à 7, comprenant une étape qui consiste à déterminer la capacité de stockage d'ions d'oxygène du convertisseur (16) à partir des signaux des capteurs amont et aval.
